# EUROPEAN PATENT SPECIFICATION

(11) **EP 1 429 466 B1**
(45) Date of publication and mention of the grant of the patent: **14.09.2005**
(21) Application number: 02293102.6
(22) Date of filing: 13.12.2002
(51) Int. Cl.: H04B 1/58, H04L 27/00, H04B 3/03

(54) **Frequency dependent telecommunication hybrid circuit**
Frequenzabhängige Telekommunikations-Hybrid-Schaltung
Circuit hybride de télécommunication dépendante de la fréquence

(43) Date of publication of application: 16.06.2004
(73) Proprietor: ALCATEL, 75008 Paris (FR)
(72) Inventor: Thomson, Wim, 2550 Kontich (BE); Fossion, Marc Jean Joseph, 5140 Ligny (BE)
(74) Representative: Plas, Axel Ivo Michel

(56) References cited:
- EP-A- 1 081 874
- WO-A-98/43385
- CHANG Z-Y ET AL: "A CMOS ANALOG FRONT-END CIRCUIT FOR AN FDM-BASED ADSL SYSTEM" IEEE JOURNAL OF SOLID-STATE CIRCUITS, IEEE INC. NEW YORK, US, vol. 30, no. 12, 1 December 1995 (1995-12-01), pages 1449-1455, XP000557250 ISSN: 0018-9200

## Description

The present invention relates to a telecommunication hybrid circuit adapted to interface a line driver and a telecommunication line, said telecommunication hybrid circuit having first and second driver terminals connected to said line driver and first and second telecommunication terminals connected to said telecommunication line, said telecommunication hybrid circuit further comprising:
- a first series impedance connected between said first driver terminal and said first telecommunication terminal;
- a second series impedance connected between said second driver terminal and said second telecommunication terminal;
- a first cross-coupled impedance connected between said first driver terminal and said second telecommunication terminal; and
- a second cross-coupled impedance connected between said second driver terminal and said first telecommunication terminal.

Such a telecommunication hybrid circuit with series impedances is generally known in the art. A problem is that the power consumption thereof is relatively high. EP1 081 874 discloses such a prior art hybrid circuit.

A first solution to reduce the power consumption of the known hybrid circuit consists in increasing the value of the series impedances. This first solution reduces the power consumption but leads to a reduction of the bit rate of the receive signal. Such a reduction of bit rate is to avoid, especially when the telecommunication hybrid circuit is used as an interface between a telecommunication line and the line driver of an Asymmetric Digital Subscriber Line [ADSL] Central Office equipment.

An object of the present invention is to provide a telecommunication hybrid circuit of the above known type but with reduced power consumption, while not negatively affecting the bit rate of the receive signal.

According to the invention, this object is achieved due to the fact that each of said first and second series impedances includes a device having a frequency dependant impedance.

In this way, the values of the series impedances can be adapted to the telecommunication hybrid circuit requirements as mentioned above.

Another characterizing embodiment of the present invention is that said telecommunication hybrid circuit is adapted to receive signals from and to transmit signals to said telecommunication line, that the frequencies of the received signals are in a receive frequency band and the frequencies of the transmitted signals are in a transmit frequency band, said transmit frequency band being distinct from said receive frequency band, and that the frequency dependant device has first impedance values for the frequencies of said receive frequency band and has second impedance values for the frequencies said transmit frequency band, said second impedance values being different from said first impedance values.

Because the series impedances have a different value for the receive and for the transmit frequency bands, the bit rate reduction is controlled accordingly. In other words, the telecommunication hybrid circuit behaves as a frequency band filter showing a different impedance in function of the frequency. Different impedances can be obtained in function of the frequency band.

In a preferred embodiment, the present invention is characterized in that said first impedance values for the frequencies of said receive frequency band are relatively high, while said second impedance values for the frequencies said transmit frequency band are relatively low.

A lower series impedance leads to less power consumption in the transmit frequency band, whilst a higher series impedance allows to maintain a suitable bit rate in the receive frequency band.

Also another characterizing embodiment of the present invention is that said first series impedance comprises a first frequency dependant device connected in series with a first resistor, while said second series impedance comprises a second frequency dependant device connected in series with a second resistor.

Further characterizing embodiments of the present frequency dependent telecommunication hybrid circuit are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

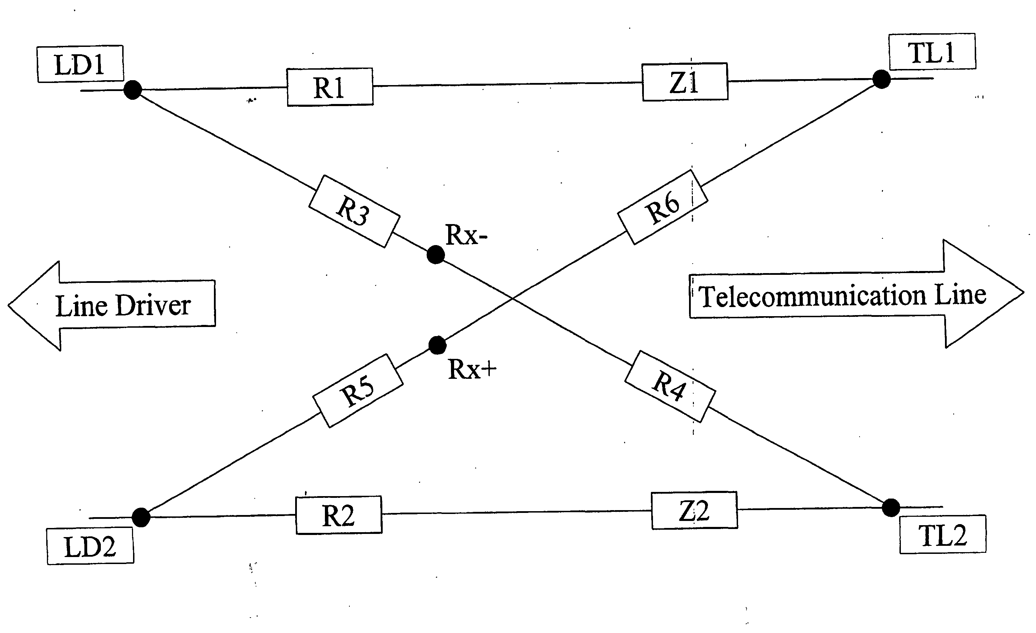

The above and other objects and features of the invention will become more apparent and the invention itself will be best understood by referring to the following description of an embodiment taken in conjunction with the accompanying drawings wherein the figure represents a frequency dependent telecommunication hybrid circuit according to the invention.

The hybrid circuit shown in the figure is adapted to interface terminals LD1, LD2 of a line driver in a telecommunication system with terminals TL1, TL2 of a telecommunication line.

Between a first line drive terminal LD1 and a first telecommunication terminal TL1, the hybrid circuit comprises the series connection of a first resistor R1 and a first frequency dependant device Z1, while between a second line drive terminal LD2 and a second telecommunication terminal TL2, the hybrid circuit comprises the series connection of a second resistor R2 and a second frequency dependant device Z2. Additionally, the hybrid circuit comprises, between the first line drive terminal LD1 and the second telecommunication terminal TL2, a first cross-connected impedance constituted by the series connection of two resistors R3 and R4 at the junction point of which a first receive terminal Rx- of a receive circuit (not shown) is provided. Similarly, a second receive terminal Rx+ of the receive circuit is provided at the junction point of resistors R5 and R6 that are series connected between the second line drive terminal LD2 and the first telecommunication terminal TL1, forming together a second cross-connected impedance. It is to be noted that the resistors R3 and R5, as well as the resistors R4 and R6 are respectively substantially identical. Similarly, the resistors R1 and R2, as well as the frequency dependant devices Z1 and Z2 are also respectively substantially identical.

The devices Z1 and Z2 have a frequency dependant impedance and the present telecommunication hybrid circuit is preferably used to operate according to the Asymmetric Digital Subscriber Line [ADSL] protocol. Therein, signals are received from the telecommunication line in a receive frequency band of which the frequencies are relatively low, while signals are transmitted to this telecommunication line in a transmit frequency band of which the frequencies are relatively higher.

The frequency dependant impedances of each device Z1 and Z2 are such that these devices show relatively low impedance values (near to 0) for frequencies of the transmit frequency band and relatively high impedance values for the frequencies of the receive frequency band. As a result, the power consumption is reduced in the transmit direction where the series impedances are relatively low. However, the values of the series impedances remain relatively high in the receive direction in order to avoid bit rate reduction.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A telecommunication hybrid circuit adapted to interface a line driver and a telecommunication line, said telecommunication hybrid circuit having first (LD1) and second (LD2) driver terminals connected to said line driver and first (TL1) and second (TL2) telecommunication terminals connected to said telecommunication line, said telecommunication hybrid circuit further comprising:
- a first series impedance (R1, Z1) connected between said first driver terminal (LD1) and said first telecommunication terminal (TL1);
- a second series impedance (R2, Z2) connected between said second driver terminal (LD2) and said second telecommunication terminal (TL2);
- a first cross-coupled impedance (R3, R4) connected between said first driver terminal (LD1) and said second telecommunication terminal (TL2); and
- a second cross-coupled impedance (R5, R6) connected between said second driver terminal (LD2) and said first telecommunication terminal (TL1),
**characterized in that** each of said first (R1, Z1) and second (R2, Z2) series impedances includes a device (Z1; Z2) having a frequency dependant impedance.

2. The telecommunication hybrid circuit according to claim 1, **characterized in that** said telecommunication hybrid circuit is adapted to receive signals from and to transmit signals to said telecommunication line (TL1, TL2),
**in that** the frequencies of the received signals are in a receive frequency band and the frequencies of the transmitted signals are in a transmit frequency band, said transmit frequency band being distinct from said receive frequency band,
and **in that** the frequency dependant device (Z1; Z2) has first impedance values for the frequencies of said receive frequency band and has second impedance values for the frequencies said transmit frequency band, said second impedance values being different from said first impedance values.

3. The telecommunication hybrid circuit according to claim 2, **characterized in that** said first impedance values for the frequencies of said receive frequency band are relatively high, while said second impedance values for the frequencies said transmit frequency band are relatively low.

4. The telecommunication hybrid circuit according to claim 1, **characterized in that** said telecommunication hybrid circuit is adapted to operate according to the Asymmetric Digital Subscriber Line [ADSL] protocol.

5. The telecommunication hybrid circuit according to claim 1, **characterized in that** said first series impedance (R1, Z1) comprises a first frequency dependant device (Z1) connected in series with a first resistor (R1), while said second series impedance (R2, Z2) comprises a second frequency dependant device (Z2) connected in series with a second resistor (R2).

6. The telecommunication hybrid circuit according to claim 5, **characterized in that** said first resistor (R1) is substantially identical to said second resistor (R2), and **in that** said first frequency dependant device (Z1) is substantially identical to said second frequency dependant device (Z2).

7. The telecommunication hybrid circuit according to claim 1, **characterized in that** said first cross-coupled impedance (R3, R4) is substantially identical to said second cross-coupled impedance (R5, R6).

8. The telecommunication hybrid circuit according to claim 1, **characterized in that** said first (R3, R4) and second (R5, R6) cross-coupled impedances each comprises the series connection of two resistors at the junction points of which receive terminals (Rx-, Rx+) are provided.

## Patentansprüche

1. Telekommunikations-Hybrid-Schaltung, dafür geeignet, einen Leitungstreiber und eine Telekommunikationsleitung zu verbinden, wobei die Telekommunikations-Hybrid-Schaltung erste (LD1) und zweite (LD2) Treiberanschlüsse besitzt, die mit dem Leitungstreiber verbunden sind, sowie erste (TL1) und zweite (TL2) Telekommunikationsanschlüsse, die mit der Telekommunikationsleitung verbunden sind, wobei die Telekommunikations-Hybrid-Schaltung ferner aufweist:
- eine erste Reihenimpedanz (R1, Z1), die zwischen dem ersten Treiberanschluss (LD1) und dem ersten Telekommunikationsanschluss (TL1) verbunden ist;
- eine zweite Reihenimpedanz (R2, Z2), die zwischen dem zweiten Treiberanschluss (LD2) und dem zweiten Telekommunikationsanschluss (TL2) verbunden ist;
- eine erste kreuzgekoppelte Impedanz (R3, R4), die zwischen dem ersten Treiberanschluss (LD1) und dem zweiten Telekommunikationsanschluss (TL2) verbunden ist; und
- eine zweite kreuzgekoppelte Impedanz (R5, R6), die zwischen dem zweiten Treiberanschluss (LD2) und dem ersten Telekommunikationsanschluss (TL1) verbunden ist,
**dadurch gekennzeichnet, dass** jede der ersten (R1, Z1) und zweiten (R2, Z2) Reihenimpedanzen eine Vorrichtung (Z1; Z2) enthält, die eine frequenzabhängige Impedanz besitzt.

2. Telekommunikations-Hybrid-Schaltung nach Anspruch 1, **dadurch gekennzeichnet, dass** die Telekommunikations-Hybrid-Schaltung geeignet ist, Signale von der Telekommunikationsleitung (TL1, TL2) zu empfangen und an sie zu übertragen;
**dadurch**, dass die Frequenzen der empfangenen Signale in einem Empfangsfrequenzband liegen und dass die Frequenzen der übertragenen Signale in einem Übertragungsfrequenzband liegen, wobei das Übertragungsfrequenzband vom Empfangsfrequenzband verschieden ist;
und **dadurch**, dass die frequenzabhängige Vorrichtung (Z1; Z2) erste Impedanzwerte für die Frequenzen des Empfangsfrequenzbandes hat und zweite lmpedanzwerte für die Frequenzen des Übertragungsfrequenzbandes hat, wobei sich die zweiten Impedanzwerte von den ersten Impedanzwerten unterscheiden.

3. Telekommunikations-Hybrid-Schaltung nach Anspruch 2, **dadurch gekennzeichnet, dass** die ersten Impedanzwerte für die Frequenzen des Empfangsfrequenzbandes relativ hoch sind, während die zweiten Impedanzwerte für die Frequenzen des Übertragungsfrequenzbandes relativ niedrig sind.

4. Telekommunikations-Hybrid-Schaltung nach Anspruch 1, **dadurch gekennzeichnet, dass** die Telekommunikations-Hybrid-Schaltung geeignet ist, nach dem ADSL-Protokoll ["Asymmetric Digital Substricber Line"] zu arbeiten.

5. Telekommunikations-Hybrid-Schaltung nach Anspruch 1, **dadurch gekennzeichnet, dass** die erste Reihenimpedanz (R1, Z1) eine erste frequenzabhängige Vorrichtung (Z1) aufweist, die in Reihe mit einem ersten Widerstand (R1) verbunden ist, während die zweite Reihenimpedanz (R2, Z2) eine zweite frequenzabhängige Vorrichtung (Z2) aufweist, die in Reihe mit einem zweiten Widerstand (R2) verbunden ist.

6. Telekommunikations-Hybrid-Schaltung nach Anspruch 5, **dadurch gekennzeichnet, dass** der erste Widerstand (R1) im Wesentlichen identisch mit dem zweiten Widerstand (R2) ist und **dadurch**, dass die erste frequenzabhängige Vorrichtung (Z1) im Wesentlichen identisch mit der zweiten frequenzabhängigen Vorrichtung (Z2) ist.

7. Telekommunikations-Hybrid-Schaltung nach Anspruch 1, **dadurch gekennzeichnet, dass** die erste kreuzgekoppelte Impedanz (R3, R4) im Wesentlichen identisch mit der zweiten kreuzgekoppelten Impedanz (R5, F6) ist.

8. Telekommunikations-Hybrid-Schaltung nach Anspruch 1, **dadurch gekennzeichnet, dass** die erste (R3, R4) und die zweite (R5, R6) kreuzgekoppelte Impedanz jeweils die in Reihe geschaltete Verbindung von zwei Widerständen aufweisen, an deren Verbindungspunkten Empfangsanschlüsse (Rx-, Rx+) vorgesehen sind.

## Revendications

1. Circuit hybride de télécommunication adapté pour établir une interface entre un émetteur-récepteur en bande de base et une ligne de télécommunication, ledit circuit hybride de télécommunication ayant des premier (LD1) et deuxième (LD2) terminaux d'émetteur-récepteur connectés audit émetteur-récepteur en bande de base et des premier (TL1) et deuxième (TL2) terminaux de télécommunication connectés à ladite ligne de télécommunication, ledit circuit hybride de télécommunication comprenant en outre :
- une première impédance série (R1, Z1) connectée entre ledit premier terminal d'émetteur-récepteur (LD1) et ledit premier terminal de télécommunication (TL1) ;
- une deuxième impédance série (R2, Z2) connectée entre ledit deuxième terminal d'émetteur-récepteur (LD2) et ledit deuxième terminal de télécommunication (TL2) ;
- une première impédance à couplage transversal (R3, R4) connectée entre ledit premier terminal d'émetteur-récepteur (LD1) et ledit deuxième terminal de télécommunication (TL2) ; et
- une deuxième impédance à couplage transversal (R5, R6) connectée entre ledit deuxième terminal d'émetteur-récepteur (LD2) et ledit premier terminal de télécommunication (TL1),
**caractérisé en ce que** chacune desdites première (R1, Z1) et deuxième (R2, Z2) impédances série comprend un dispositif (Z1 ; Z2) ayant une impédance dépendante de la fréquence.

2. Circuit hybride de télécommunication selon la revendication 1, **caractérisé en ce que** ledit circuit hybride de télécommunication est adapté pour recevoir des signaux en provenance de, et pour transmettre des signaux en direction de ladite ligne de télécommunication (TL1, TL2),
**en ce que** les fréquences des signaux reçus se situent dans une bande de fréquence de réception et que les fréquences des signaux transmis se situent dans une bande de fréquence de transmission, ladite bande de fréquence de transmission étant distincte de ladite bande de fréquence de réception,
et **en ce que** le dispositif ayant une impédance dépendante de la fréquence (Z1 ; Z2) a des premières valeurs d'impédance pour les fréquences de ladite bande de fréquence de réception et a des deuxièmes valeurs d'impédance pour les fréquences de ladite bande de fréquence de transmission, lesdites deuxièmes valeurs d'impédance étant différentes desdites premières valeurs d'impédance.

3. Circuit hybride de télécommunication selon la revendication 2, **caractérisé en ce que** lesdites premières valeurs d'impédance pour les fréquences de ladite bande de fréquence de réception sont relativement élevées, tandis que lesdites deuxièmes valeurs d'impédance pour les fréquences de ladite bande de fréquence de transmission sont relativement faibles.

4. Circuit hybride de télécommunication selon la revendication 1, **caractérisé en ce que** ledit circuit hybride de télécommunication est adapté pour fonctionner conformément au protocole ADSL [Asymmetric Digital Subscriber Line = Ligne d'abonné numérique à débit asymétrique].

5. Circuit hybride de télécommunication selon la revendication 1, **caractérisé en ce que** ladite première impédance série (R1, Z1) comprend un premier dispositif ayant une impédance dépendante de la fréquence (Z1) connecté en série à une première résistance (R1), tandis que ladite deuxième impédance série (R2, Z2) comprend un deuxième dispositif ayant une impédance dépendante de la fréquence (Z2) connecté en série à une deuxième résistance (R2).

6. Circuit hybride de télécommunication selon la revendication 5, **caractérisé en ce que** ladite première résistance (RI) est sensiblement identique à ladite deuxième résistance (R2), et **en ce que** ledit premier dispositif ayant une impédance dépendante de la fréquence (Z1) est sensiblement identique au dit deuxième dispositif ayant une impédance dépendante de la fréquence (Z2).

7. Circuit hybride de télécommunication selon la revendication 1, **caractérisé en ce que** ladite première impédance à couplage transversal (R3, R4) est sensiblement identique à ladite deuxième impédance à couplage transversal (R5, R6).

8. Circuit hybride de télécommunication selon la revendication 1, **caractérisé en ce que** lesdites première (R3, R4) et deuxième (R5, R6) impédances à couplage transversal comprennent chacune la connexion série de deux résistances au niveau du point de jonction desquelles des terminaux de réception (Rx-, Rx+) sont prévus.
